**Europäisches Patentamt**

**European Patent Office**

**Office européen des brevets**

(11) Veröffentlichungsnummer: **0 171 469**
**B1**

(12) # EUROPÄISCHE PATENTSCHRIFT

(45) Veröffentlichungstag der Patentschrift:
02.08.89

(51) Int. Cl.⁴: **H 04 L 25/26**

(21) Anmeldenummer: **84116472.6**

(22) Anmeldetag: **28.12.84**

(54) **Empfangsschaltung für Signalübertragungssysteme.**

(30) Priorität: **17.08.84 DE 3430339**

(43) Veröffentlichungstag der Anmeldung:
**19.02.86 Patentblatt 86/8**

(45) Bekanntmachung des Hinweises auf die Patenterteilung:
**02.08.89 Patentblatt 89/31**

(84) Benannte Vertragsstaaten:
**DE FR GB IT NL**

(56) Entgegenhaltungen:
**DE-A-2 714 215**
**US-A-4 024 501**

**OPTOELECTRONICS/FIBER-OPTICS
APPLICATIONS MANUAL, 2nd edition, 1981, Seiten
10.1 - Absatz 10.2.2; HEWLETT-PACKAND: Section
10, "Fiber optics and optocouplers for digital data
transmission".**

(73) Patentinhaber: **Nixdorf Computer
Aktiengesellschaft, Fürstenallee 7, D-4790
Paderborn (DE)**

(72) Erfinder: **Laue, Hans- Bodo, Eggering 60, D-4791
Altenbeken (DE)**

(74) Vertreter: **Schaumburg, Thoenes & Englaender,
Mauerkircherstrasse 31 Postfach 86 07 48, D-8000
München 80 (DE)**

EP 0 171 469 B1

## Beschreibung

Die Erfindung betrifft eine Empfangsschaltung für Signalübertragungssysteme zur Regeneration eines Datensignals und Erzeugung eines Empfangspegelmeldesignals aus einem empfangenen bipolaren Eingangssignal, mit einer Optokoppleranordnung zur galvanischen Trennung von Leitungs- und Betriebsseite und mit zwei Komparatoren zur Vorgabe einer Empfangsschwelle für das bipolare Eingangssignal.

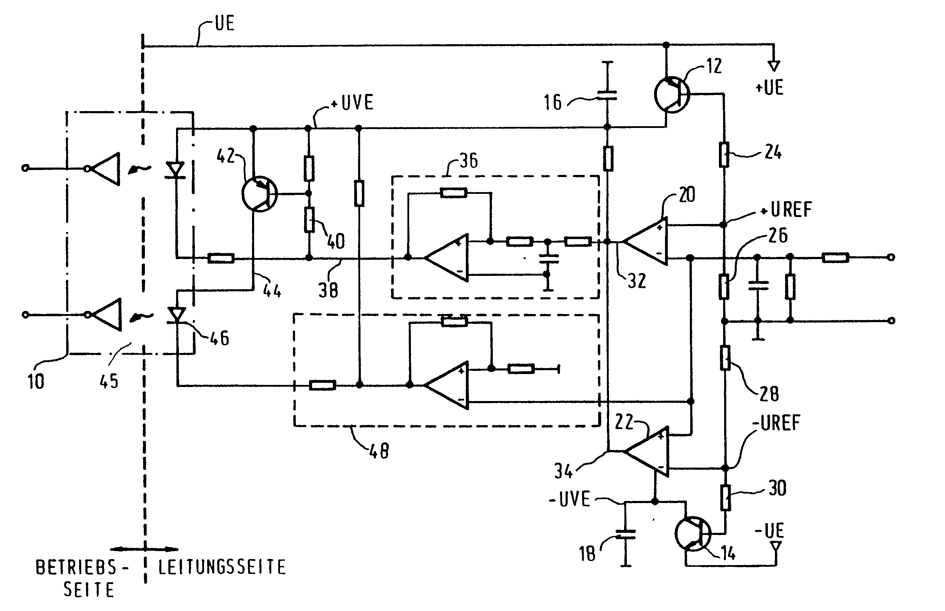

Eine solche Empfangsschaltung ist bereits in der Fig. 10.3.2-3 der Druckschrift "Optoelectronics, Fiberoptics Application Manual", 1981, der Firma Hewlett-Packard gezeigt. Bei dieser Empfangsschaltung wird ein differentielles, erdsymmetrisch übertragenes Empfangssignal über zwei Komparatoren, die eine Empfangsschwelle vorgeben, abgegriffen. Gültige Empfangsdaten, die die vorgegebene Empfangsschwelle überschreiten, werden mittels einer Optokoppleranordnung galvanisch entkoppelt von der Leitungsseite zur Betriebsseite der Empfangsschaltung übertragen und dort mittels einer bistabilen Kippschaltung regeneriert. Auch das Empfangspegelmeldesignal wird erst betriebsseitig aus dem erdsymmetrisch übertragenen differentiellen Empfangssignal erzeugt. Dies geschieht dadurch, daß die Ausgangssignale der beiden Optokoppler der Optokoppleranordnung, über die das erdsymmetrische Empfangssignal bei ausreichendem Empfangspegel übertragen wird, über ein NAND-Glied logisch verknüpft werden, so daß an dessen Ausgang das Empfangspegelmeldesignal anliegt.

Eine solche Empfangsschaltung, bei der das Empfangspegelmeldesignal erst betriebsseitig erzeugt wird, hat den Nachteil, daß Empfangsdaten nicht immer erst nach Überschreiten einer Empfangsschwelle anliegen. Dies ist auf Verzerrungen des empfangenen Eingangssignals zurückzuführen, die auf dem Übertragungsweg verursacht werden, und kann unter Umständen bei der Auswertung der Empfangsdaten zu schwierigkeiten führen.

Es ist daher Aufgabe der Erfindung, eine Empfangsschaltung anzugeben, mit der auch bei verzerrtem empfangenem Eingangssignal die Regeneration der Empfangsdaten fehlerfrei möglich ist.

Diese Aufgabe wird erfindungsgemäß dadurch gelöst, daß das Empfangspegelmeldesignal leitungsseitig erzeugt wird und daß das Datensignal leitungsseitig regeneriert wird.

Bei Anwendung dieser Erfindung kann der vorstehend beschriebene Nachteil der bekannten Empfangsschaltung vermieden werden, so daß auch bei einem verhältnismäßig stark verzerrten bipolaren Eingangssignal stabile Empfangsdaten auf der Betriebsseite letztlich erst nach Überschreiten der Empfangsschwelle anliegen. Dies hat weiter zur Folge, daß die Leuchtdioden der Optokoppleranordnung nur eingeschaltet sind, wenn ein Eingangssignal mit einem gültigen Empfangspegel am Empfänger anliegt, was zu einer langen Lebensdauer der Optokoppleranordnung beiträgt und die Stromaufnahme der leitungsseitigen Schaltung bei unzureichendem Empfangspegel herabsetzt.

In einer vorzugsweisen Ausbildung der erfindungsgemäßen Empfangsschaltung wird das Empfangspegelmeldesignal für jede Polarität des Eingangssignals durch je einen der beiden Komparatoren erzeugt.

Wird das Empfangspegelmeldesignal in einer weiteren Ausbildung der Erfindung durch ein RC-Glied mit nachgeschaltetem ersten Schmitt-Trigger verzögert, so wird das Empfangspegelmeldesignal erst dann ausgegeben, wenn ein gültiger Empfangspegel des bipolaren Eingangssignals oberhalb der positiven bzw. negativen Empfangsschwelle für eine Mindestzeit am Eingang des Empfängers anliegt. Es spielt dabei keine Rolle, mit welcher Amplitude das Eingangssignal über der betreffenden Empfangsschwelle anliegt, wodurch kurzzeitig hohe, unter der obengenannten Mindestzeit anliegende Störspannungen unabhängig von ihrer Amplitude unterdrückt werden. Es ist auf diese Weise gewährleistet, daß durch Störspannungsspitzen nicht fälschlicherweise ein Empfangspegelmeldesignal erzeugt wird. Die Ein- bzw. Ausschaltzeiten des Empfangspegelmeldesignals sind empfangspegelunabhängig und können für gültige Empfangspegel oberhalb der Empfangsschwelle unterschiedlich festgelegt werden.

In einer vorzugsweisen Ausbildung der Erfindung ist das Empfangspegelmeldesignal Steuersignal für einen Schalttransistor, der im Primärstromkreis des die Datensignale übertragenden Teils der Optokoppleranordnung angeordnet ist. Dies hat den Vorteil, daß die die Datensignale übertragende Leuchtdiode der Optokoppleranordnung durch das leitungsseitig erzeugte Empfangspegelmeldesignal gesperrt wird, wenn kein gültiger Empfangspegel am Eingang der Empfangsschaltung anliegt. Es ist dadurch einerseits eine lange Lebensdauer der Optokoppleranordnung und andererseits bei unzureichendem Empfangspegel ein definiertes Ausgangssignal des die Datensignale übertragenden Teils der Optokoppleranordnung gewährleistet.

Zur Regeneration des Datensignals wird das bipolare Eingangssignal vorteilhaft über einen zweiten Schmitt-Trigger geführt. Die Hysterese dieses Schmitt-Triggers kann so eingestellt werden, daß dieser das verformte Eingangsempfangssignal so aufbereitet, daß unter Berücksichtigung der durch die Optokoppleranordnung hervorgerufenen Schrittverzerrung das Ausgangssignal des die Datensignale übertragenden Teils der Optokoppleranordnung möglichst wenig Schrittverzerrungen über den gesamten Empfangspegelbereich des Empfängers aufweist. Es ist dadurch ein sicherer Empfang der Empfangsdaten besonders bei hohen Übertragungsgeschwindigkeiten gewährleistet.

Es hat sich als vorteilhaft erwiesen, als Schmitt-Trigger beschaltete Komparatoren vorzusehen, da diese zusammen mit den Komparatoren, die das Empfangspegelmeldesignal erzeugen, platzsparend und kostengünstig in einem Gehäuse untergebracht werden können.

Die einzige Figur zeigt ein Ausführungsbeispiel einer Empfangsschaltung für Signalübertragungssysteme.

Die Empfangsschaltung besteht aus einem betriebsseitigen Teil (in der Figur links von der vertikalen gestrichelten Linie) und einem leitungsseitigen Teil (in der Figur rechts von der gestrichelten Linie), wobei der betriebsseitige Teil der Empfangsschaltung von dem leitungsseitigen Teil mittels einer Optokoppleranordnung 10 galvanisch entkoppelt ist.

Der leitungsseitige Teil der Empfangsschaltung wird über Gleichrichtertransistoren 12 und 14 in Basisschaltung mit Spannung versorgt. Durch diese wird zusammen mit Siebkondensatoren 16 und 18 eine leitungsseitig anliegende Wechselspannung UE gleichgerichtet, so daß sich eine positive und eine negative Empfängerversorgungsspannung +UVE, -UVE ergibt.

Bei positiver Polarität des Eingangssignals wird das Empfangspegelmeldesignal durch einen ersten Komparator 20, bei negativer Polarität des Eingangssignals durch einen zweiten Komparator 22 erzeugt. Die positive Referenzspannung +UREF am Spannungskomparator 20 zur Vorgabe einer Empfangsschwelle für ein positives Eingangssignal wird durch Abgriff der Basiswiderstände 24 und 26 des Gleichrichtertransistors 12 erzeugt. Analog wird die negative Referenzspannung -UREF am Spannungskomparator 22 zur Vorgabe einer Empfangsschwelle für ein negatives Eingangssignal durch Abgriff der Basiswiderstände 28 und 30 des Gleichrichtertransistors 14 erzeugt.

Diese Art der Referenzspannungserzeugung hat den Vorteil, daß der Eingangswiderstand der Empfangsschaltung beim Hochlaufen oder Ausfall der Empfängerversorgungsspannungen +UVE, -UVE erhöht wird und verglichen mit üblichen Referenzspannungserzeugungen noch zwei Widerstände eingespart werden. Die Ausgänge 32 und 34 der beiden Komparatoren 20 und 22 sind mit dem Eingang eines ersten Schmitt-Triggers 36, der das Empfangspegelmeldesignal verzögert, verbunden. Am Ausgang 38 dieses Schmitt-Triggers 36 liegt dann das Empfangspegelmeldesignal an, das über die Optokoppleranordnung 10 zur Betriebsseite übertragen wird. Der Ausgang 38 des Schmitt-Triggers 36 ist weiter über einen Widerstand 40 mit der Basis eines Schalttransistors 42 verbunden. Dieser ist im Primärstromkreis 44 des die Datensignale übertragenden Teils 45 der Optokoppleranordnung 10 angeordnet und legt die Optokoppler-Leuchtdiode 46 an Spannung, wenn das Empfangspegelmeldesignal den Schalttransistor 42 durchschaltet.

Die empfangenen Eingangsdaten werden mittels eines zweiten Schmitt-Triggers 48 regeneriert und über den die Datensignale übertragenden Teil 45 der Optokoppleranordnung 10 zur Betriebsseite übertragen. Letzteres ist nur möglich, wenn das Empfangspegelmeldesignal am Ausgang 38 des ersten Schmitt-Triggers 36 den Schalttransistor 42 durchgeschaltet hat, so daß die Optokoppler-Leuchtdiode 46 an Spannung liegt.

**Patentansprüche**

1. Empfangsschaltung für Signalübertragungssysteme zur Regeneration eines Datensignals und Erzeugung eines Empfangspegelmeldesignals aus einem empfangenen bipolaren Eingangssignal, mit einer Optokoppleranordnung zur galvanischen Trennung von Leitungs- und Betriebsseite und mit zwei Komparatoren zur Vorgabe einer Empfangsschwelle für das bipolare Eingangssignal, dadurch <u>gekennzeichnet</u>, daß das Empfangspegelmeldesignal leitungsseitig erzeugt wird und daß das Datensignal leitungsseitig regeneriert wird.

2. Empfangsschaltung nach Anspruch 1, dadurch <u>gekennzeichnet</u>, daß das Empfangspegelmeldesignal für jede Polarität des Eingangssignals durch je einen der beiden Komparatoren (20, 22) erzeugt wird.

3. Empfangsschaltung nach Anspruch 1 oder 2, dadurch <u>gekennzeichnet</u>, daß das Empfangspegelmeldesignal durch einen ersten Schmitt-Trigger (36) verzögert wird.

4. Empfangsschaltung nach einem der Ansprüche 1 bis 3, dadurch <u>gekennzeichnet</u>, daß das Empfangspegelmeldesignal Steuersignal für einen Schalttransistor (42) ist, der im Primärstromkreis (44) des die Datensignale übertragenden Teils (45) der Optokoppleranordnung (10) angeordnet ist.

5. Empfangsschaltung nach einem der vorhergehenden Ansprüche, dadurch <u>gekennzeichnet</u>, daß das bipolare Eingangssignal über einen zweiten Schmitt-Trigger (48) geführt ist.

6. Empfangsschaltung nach einem der Ansprüche 3 bis 5, dadurch <u>gekennzeichnet</u>, daß als Schmitt-Trigger beschaltete Komparatoren (36, 48) vorgesehen sind.

**Claims**

1. A receiving circuit for signal transmission systems to regenerate a received data signal and to generate a receiving level control signal from a received bipolar input signal, having an optocoupler device for electrically isolating the line side from the operating side, and including two comparators for producing a receiving threshold for the bipolar input signal, <u>characterized</u> in the receiving level control signal being generated on the line side and the data signal being regenerated on the line side.

2. A receiving circuit according to claim 1, <u>characterized</u> in that the receiving level control signal is generated for each polarity of the input signal by respectively one of the two comparators (20, 22).

3. A receiving circuit according to claim 1 or 2, characterized in that the receiving level control signal is delayed by a first Schmitt trigger (36).

4. A receiving circuit according to any of claims 1 through 3, characterized in that the receiving level control signal is the driving signal for a switching transistor (42) which is located in the primary circuit (44) of the data signal transmitting component (45) of the optocoupler device (10).

5. A receiving circuit according to any one of the foregoing claims, characterized in that the bipolar input signal is fed through a second Schmitt trigger (48).

6. A receiving circuit according to any of claims 3 through 5, characterized in that comparators (36, 48) are provided which are connected as Schmitt triggers.

## Revendications

1. Circuit de réception pour systèmes de transmission de signaux pour la régénération d'un signal de données et la production d'un signal indicateur du niveau de réception à partir d'un signal d'entrée bipolaire reçu, avec un dispositif opto-coupleur pour la séparation galvanique du côté ligne et du côté exploitation, et avec deux comparateurs pour la définition d'un seuil de réception pour le signal d'entrée bipolaire, caractérisé en ce que le signal indicateur du niveau de réception est produit du côté ligne et le signal de données est régénéré du côté ligne.

2. Circuit de réception selon la revendication 1, caractérisé en ce que le signal indicateur du niveau de réception pour chacune des polarités du signal d'entrée est produit par un comparateur respectif des deux comparateurs (20, 22).

3. Circuit de réception selon la revendication 1 ou 2, caractérisé en ce que le signal indicateur du niveau de réception est retardé par une première bascule de Schmitt (36).

4. Circuit de réception selon une quelconque des revendications 1 à 3, caractérisé en ce que le signal indicateur du niveau de réception est un signal de commande pour un transistor de commutation (42) qui est disposé dans le circuit primaire (44) de la partie (45) transmettant les signaux de données et faisant partie du dispositif opto-coupleur (10).

5. Circuit de réception selon une quelconque des revendications précédentes, caractérisé en ce que le signal d'entrée bipolaire est conduit par l'intermédiaire d'une deuxième bascule de Schmitt (48).

6. Circuit de réception selon une quelconque des revendications 3 à 5, caractérisé en ce qu'il est prévu des comparateurs (36, 48) mises en circuit comme bascules de Schmitt.